# EUROPEAN PATENT APPLICATION

(11) **EP 4 390 674 A1**
(43) Date of publication of application: **26.06.2024**
(21) Application number: 22913856.5
(22) Date of filing: 15.11.2022
(51) Int. Cl.: G06F 8/70, G06F 9/54, G06F 11/36

(54) **VEHICLE DEVELOPMENT PLATFORM, DOMAIN CONTROLLER, WHOLE VEHICLE CONTROL SYSTEM, AND VEHICLE**

(30) Priority: 30.12.2021 CN 202111680458
(71) Applicant: BYD Company Limited, Shenzhen, Guangdong 518118 (CN)
(72) Inventor: ZHOU, Huan, Shenzhen, Guangdong 518118 (CN); LUO, Jinwen, Shenzhen, Guangdong 518118 (CN)
(74) Representative: Dehns Germany Partnerschaft mbB
(86) International application number: PCT/CN2022/132006
(87) International publication number: WO 2023/124597

(57) **Abstract**

A vehicle development platform, a domain controller, a vehicle control system, and a vehicle. The development platform includes a hardware layer, an operating system and driver layer, a platform service layer, and an application layer that are connected to each other and intercommunicate with each other. The hardware layer is defined as a carrier for software resources and is configured to form a resource pool. The operating system and driver layer is run on the hardware layer. The operating system and driver layer is configured to provide a running condition for the platform service layer. The platform service layer is run on the operating system and is configured to transmit and manage data in a vehicle. The application layer is configured to load an upper-layer service program and an upper-layer application program of the vehicle.

## Description

### CROSS-REFERENCE TO RELATED APPLICATIONS

The present disclosure claims priority to Chinese Patent Disclosure No. 202111680458.2 filed on December 30, 2021, which is incorporated herein by reference in its entirety.

### FIELD

The present disclosure generally relates to the field of automobile technologies, and more specifically, to a vehicle development platform, a domain controller, a vehicle control system, and a vehicle.

### BACKGROUND

With the development of computer technologies, an increasingly large development space is provided for control in the field of automobiles.

In a current automobile control system, a vehicle controller, a motor controller, and a microcell are configured, and a wireless transmission network is constructed, so that in a running process of an automobile, the vehicle controller communicates with the motor controller through a signal transceiver, and sends a control instruction to the motor controller, to enable the motor controller to control a running status of the vehicle according to the control instruction.

For the foregoing automobile control system, because a large amount of data is secondarily transmitted through a wireless network, the real-time performance and stability of the system are not high, and a signal is susceptible to interference. In addition, the overall control of the vehicle controller causes high maintenance costs, monotonous performance, and poor extensibility.

### SUMMARY

In view of the foregoing defects and deficiencies in the related art, it is intended to provide a vehicle development platform, a domain controller, a vehicle control system, and a vehicle. Heterogeneous operating systems are installed on domain controllers, so that domain controllers with various functions in a vehicle control system are independently developed and seamlessly integrated and invoke each other, to improve the performance and extensibility of vehicle control.

According to a first aspect, embodiments of the present disclosure provide a vehicle development platform, where the vehicle development platform is run on a vehicle controller, and the vehicle development platform includes a hardware layer, an operating system and driver layer, a platform service layer, and an application layer that are interconnected to bottom-up and intercommunicate with each other;
the hardware layer is defined as a carrier for software resources and is configured to form a resource pool;
the operating system and driver layer is run on the hardware layer, and the operating system and driver layer is configured to provide a running condition for the platform service layer;
the platform service layer is run on the operating system and is configured to transmit and manage data in a vehicle; and
the application layer is configured to load an upper-layer service program and an upper-layer application program of the vehicle.

Optionally, for the vehicle development platform in the embodiments of the present disclosure, the platform service layer includes a data bus module, a data function module, and an operating system interface module;
the data bus module is configured to transmit and share data between domain controllers or inside a domain controller on the vehicle;
the data function module is configured to store and update the data; and
the operating system interface module is configured to process an upper-layer service and apply a function of invoking an operating system and a driver.

Optionally, for the vehicle development platform in the embodiments of the present disclosure, the operating system in the operating system and driver layer includes a Linux operating system and a QNX operating system, and each operating system corresponds to one POSIX operating system interface.

Optionally, for the vehicle development platform in the embodiments of the present disclosure, a bottom layer hardware interface is configured in a bottom layer of each operating system.

Optionally, for the vehicle development platform in the embodiments of the present disclosure, the data function module includes a time synchronization unit, a service management unit, a data persistence unit, a log and trace unit, a data update unit, an executor control service unit, network management, security management, a signal acquisition service unit, and/or a diagnostics service unit.

Optionally, for the vehicle development platform in the embodiments of the present disclosure, the application layer includes an application service layer and an application program layer, and the application service layer is configured to load a vehicle.

Optionally, for the vehicle development platform in the embodiments of the present disclosure, the application service layer includes a vehicle state service module, a signal outgoing service module, a signal parsing service module, an air conditioning control service module, a window control service module, a door control service module and/or an identity authentication service module.

Optionally, for the vehicle development platform in the embodiments of the present disclosure, the application program layer includes a meter application module, an air conditioning application module, a lighting control application module, a door control application module, a window control application module, a remote driving application module and/or a cloud service application module.

Optionally, for the vehicle development platform in the embodiments of the present disclosure, the vehicle development platform is developed based on a service-oriented architecture (SOA).

Optionally, for the vehicle development platform in the embodiments of the present disclosure, the vehicle development platform is configured with a bottom layer hardware interface.

According to a second aspect, embodiments of the present disclosure provide a domain controller, including a memory, a processor, and a computer program that is stored in the memory and executable on the processor, where the vehicle development platform in the first aspect is installed on the domain controller.

According to a third aspect, embodiments of the present disclosure provide a vehicle control system, where the vehicle control system includes at least one domain controller in the second aspect.

According to a fourth aspect, embodiments of the present disclosure provide a vehicle, the vehicle control system in the third aspect is installed on the vehicle.

For the vehicle development platform, the domain controller, the vehicle control system, and the vehicle provided in the embodiments of the present disclosure, a platform including a hardware layer, an operating system and driver layer, a platform service layer, and an application layer that are interconnected bottom-up and intercommunicate with each other is developed on a controller of a vehicle, so that after all logic layers are integrated, a platform is provided for development and application of controllers of the vehicle. In this way, controllers with different functions can be independently developed and implement different functions, to construct a vehicle control system with complete functions. In a running process of a vehicle system, a large amount of data is transmitted between controllers in real time, to ensure the security of a user and a vehicle, enabling the control system to perform remote invocation according to actual requirements.

### BRIEF DESCRIPTION OF THE DRAWINGS

Other features, objectives, and advantages of the present disclosure will become more apparent by reading the detailed description of the non-limiting embodiments with reference to the following accompanying drawings:
FIG. 1 is a schematic diagram of a top-layer logic framework of a vehicle domain controller according to an embodiment of the present disclosure;
FIG. 2 is a schematic diagram of a software architecture of a domain controller according to an embodiment of the present disclosure;
FIG. 3 is a schematic diagram of a software hierarchy of a domain controller according to an embodiment of the present disclosure;
FIG. 4 is a schematic structural diagram of a development module of a domain controller according to an embodiment of the present disclosure;
FIG. 5 is a schematic diagram of an operating system interface of a domain controller according to an embodiment of the present disclosure;
FIG. 6 is a schematic structural diagram of a development module of a domain controller according to an embodiment of the present disclosure; and
FIG. 7 is a schematic structural diagram of a computer of a processing device according to an embodiment of the present disclosure.

### DETAILED DESCRIPTION

The present disclosure is further described below in detail with reference to the accompanying drawings and embodiments. It is to be understood that the specific embodiments described herein are only for the purpose of explaining the related disclosure and are not a limitation of the disclosure. It is also to be noted that, for ease of description, only portions relevant to the disclosure are shown in the accompanying drawings.

It should be noted that the embodiments in the present disclosure and features in the embodiments may be mutually combined in case that no conflict occurs. The present disclosure is described in detail below with reference to the accompanying drawings and the embodiments.

It may be understood that a physical hardware layout of a vehicle control system may include various architectures. For example, one or more domain controllers, one or more conventional electronic control units (ECUs), and one central gateway may be included. In a running process, data is transmitted through a CAN or an Ethernet.

With the integration of technologies, the foregoing architecture is gradually simplified, and a new layout architecture is generated. That is, a quantity of ECUs of a conventional structure keeps decreasing, and the architecture is finally evolved into two or more domain controllers and a central gateway. The central gateway may further be integrated into one domain controller and is connected by an Ethernet.

With the further improvement of processor performance, the vehicle control system may only include one central processor.

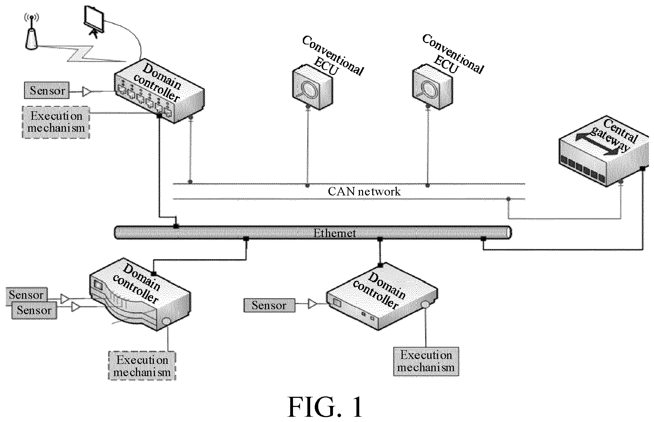

On this basis, as shown in FIG. 1, in an embodiment of the present disclosure, to improve the time efficiency of the vehicle control system and independence of various functions, according to functions that need to be implemented in a vehicle, the vehicle control system is divided into a number of independent domain controllers.

For example, the vehicle control system may include one or more domain controllers. Each domain controller may be connected to a sensor and an execution mechanism, zero or more conventional ECUs, and zero or more central gateways.

It may be understood that on the basis of a physical architecture in the vehicle control system provided in this embodiment of the present disclosure, to implement mutual cooperation between domain controllers, remote invocation of programs, and transparent transmission of data, a software development platform, that is, a vehicle development platform, needs to be configured on the domain controller in the physical architecture, so that a logic architecture of the domain controller is implemented based on the development platform, to implement the independence of each domain controller.

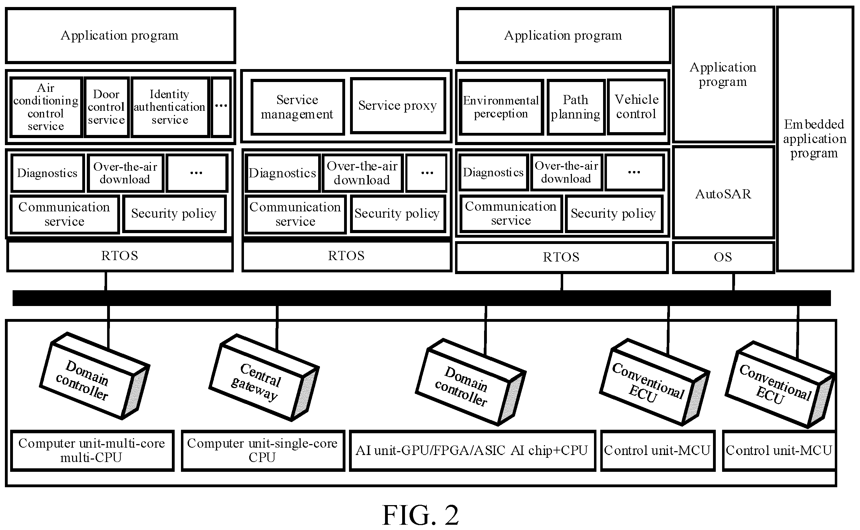

It may be understood that, as shown in FIG. 2, to achieve the foregoing obj ectives, specifically, for example, to implement a micro service on each domain controller, random access to a sensor and an executor, over-the-air download (OTA), functional modules of a terminal device, and the like, a developed software platform is run on the domain controller, that is, a heterogeneous framework of the development platform is constructed, so that different providers and development teams develop applications of the domain controller on this development platform.

It may be understood that "heterogeneous" refers to heterogeneous controllers, that is, the development platform needs to be able to run on ECUs of domain controllers of different architectures, the domain controllers of these different architectures have multiple cores and multiple processors. A most complex architecture is a CPU with an artificial intelligence (AI) computing unit+a digital integrated circuit chip (FPGA)+an artificial intelligence (AI) chip+a CPU.

In addition, "heterogeneous" further includes a network. That is, from the perspective of a vehicle, the software platform of the domain controller is heterogeneous, including an Antosar platform and a conventional ECU program. That is, the vehicle development platform run on the domain controller needs to be compatible with such a network difference.

For example, in the vehicle control system shown in FIG. 1, a number of domain controllers implement communication through an Ethernet, to ensure network security and prevent a hacker attack.

In addition, remote invocation may further be performed according to an actual requirement, to make it more convenient for a user to use the vehicle and a development team to remotely invoke in-vehicle software for development.

Therefore, as a vehicle development platform, a software architecture of the domain controller may be designed as a service-oriented architecture (SOA)-based heterogeneous domain controller.

It may be understood that the SOA is a service-oriented architecture, to divide services on the vehicle development platform according to the embodiment of the present disclosure into a platform service and an application service. A platform service and an application service may invoke each other, an application service and an application service may invoke each other, an application program may invoke a platform service, and an application service may further remotely invoke an application service on another domain controller.

In addition, in the domain controller in the vehicle, through the use of the developed software platform, the sensor, the executor, and the controller are flexibly arranged (decoupled). The data acquisition of the sensor, the control of the executor, and the functions of the controller are no longer closely coupled, to ensure transparent sharing of data, so that data sources are wide, a data amount is large, and transparent sharing of data between domain controllers and between internal chips of a domain controller need to be supported.

In addition, on the basis of the development platform, all domain controllers have openness and coordinated development, so that functions may be assigned to different development teams, providers, and the like for independent development and then seamlessly integrated.

In addition, the developed software platform is run on the domain controller, so that different hardware platforms can be supported. When a hardware platform is changed or upgraded, software modules of the functions do not need to be modified, and a quick response may be made to an application with high real-time performance, for example, a remote driving application. In addition, power consumption management can be further performed to implement sleep, wakeup, among other functions, so that the power consumption of the vehicle is controlled, and a number of domain controllers can be kept consistent in clock, thereby maintaining synchronization.

It may be understood that in a logic architecture of the vehicle control system in this embodiment of the present disclosure, data is not transmitted through a wireless network, but is directly transmitted through a domain controller, to ensure the real-time performance, integrity, and security of data, so that the real-time transmission of a large amount data between domain controllers can be implemented. Therefore, through the automation and intelligentization of electrical appliances, a large amount of video and audio data is transmitted in real time between domain controllers, so that for a user, the security of an automobile is improved, that is, the security of the user and the vehicle is ensured.

In addition, each domain controller exists independently according to an actual function of the vehicle, that is, functions are independent of each other and do not interfere with each other, so that isolation can be implemented. For example, a door lock assembly, a window control assembly, a windshield wiper assembly, a seat assembly, a vehicle body control assembly (body control module, BCM), and other functions are independent.

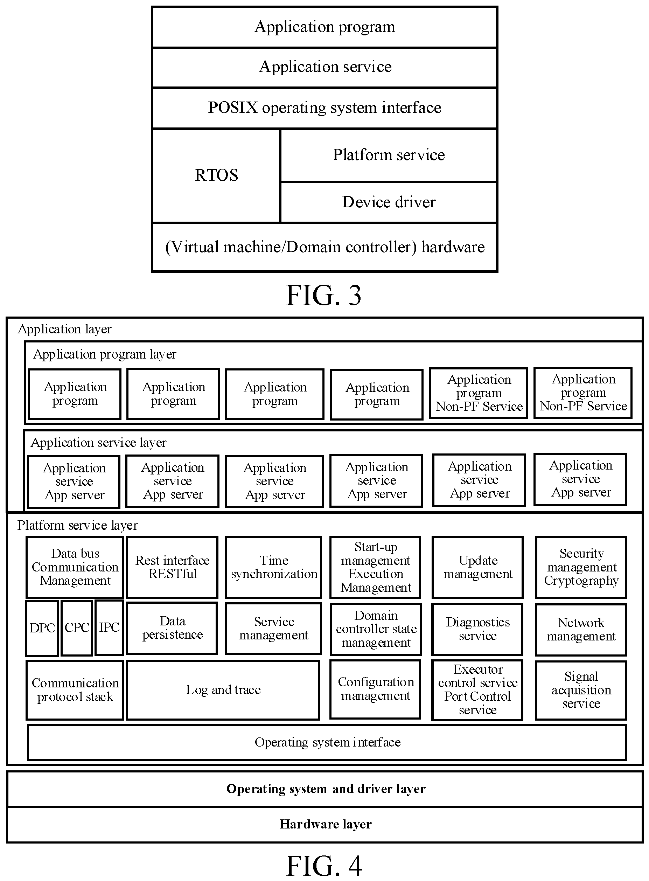

As shown in FIG. 3, in a hierarchical view of the vehicle development platform, that is, the software platform. A lowermost layer is a hardware layer. A middle layer is a platform service layer, and may include a real-time multitask operating system (RTOS), a device driver, and a service layer. Uppermost layers are a portable operating system interface (POSIX) and an application layer. The application layer may further include an application service layer and an application program layer.

To better understand the vehicle development platform run on the domain controller provided in the embodiments of the present disclosure, detailed description is provided below through FIG. 4 to FIG. 6.

FIG. 4 is a schematic diagram of a software architecture of a vehicle development platform according to an embodiment of the present disclosure. As shown in FIG. 4, the vehicle development platform is run on a domain controller of a vehicle. The vehicle development platform includes a hardware layer, a platform service layer, an interface layer, and an application layer that are interconnected bottom-up and intercommunicate with each other.

The hardware layer is defined as a carrier for software resources and is configured to form a resource pool.

An operating system interface is run on the hardware layer, and an operating system and driver layer is configured to provide a running condition for the platform service layer.

The platform service layer is run on the operating system and is configured to transmit and manage data in the vehicle.

The application layer is configured to load an upper-layer service program and an upper-layer application program of the vehicle and implement functions required for the vehicle.

Specifically, for the vehicle development platform run on the domain controller provided in this embodiment of the present disclosure, from the perspective of a logic layer, in the vehicle development platform, a lowermost layer is a hardware layer, and may be an actual domain controller, or may be a virtual machine, a container, or the like, to form the resource pool.

For example, for a track vehicle, the hardware layer may be domain controllers installed at different positions of the vehicle.

The operating system and driver layer are run above the hardware layer to provide a running condition for the platform service layer, and mainly process an upper-layer service and apply a function of invoking an operating system or a driver. The operating system may be a real-time multitask operating system (TROS), ANX, RLinux, or another operating system.

It may be understood that because the vehicle development platform needs to support hardware of different domain controllers, for domain controllers of different functions, due to different stability and real-time performance requirements, chosen operating systems may be different. For example, for a vehicle body domain controller, a real-time performance requirement of an operating system is not high, and based on consideration of costs, a Linux operating system may be chosen. For a power domain controller, both a stability requirement and a real-time performance requirement are very high, and a QNX operating system may be selected.

A specific operating system is not limited in this embodiment of the present disclosure, and may be flexibly set according to an actual case.

The platform service layer is located above the operating system and driver layer, and may be configured to implement transmission and management, for example, storage and forwarding, of data generated in a running process of the operating system. The application layer is located above the platform service layer to load the upper-layer service program and application program of the vehicle, to implement different functions, for example, air conditioning control, lighting control, power control, vehicle door control, meter display, and various user-oriented services of the vehicle.

It may be understood that for the vehicle development platform provided in this embodiment of the present disclosure, a developed vehicle development platform including different logic modules is run on a domain controller, so that after all logic modules are integrated, a platform is provided for development and application of domain controllers. In this way, domain controllers with different functions can be independently developed and implement different functions, to construct a vehicle control system with complete functions. A large amount of data is transmitted between domain controllers in real time, to ensure the security of a user and a vehicle.

Optionally, in some embodiments, the platform service layer may include a data bus module, a data function module, and an operating system interface module. The data bus module is configured to transmit and share data between domain controllers or inside a domain controller. The data function module is configured to store and update data. The operating system interface module is configured to process an upper-layer service and apply a function of invoking an operating system and a driver.

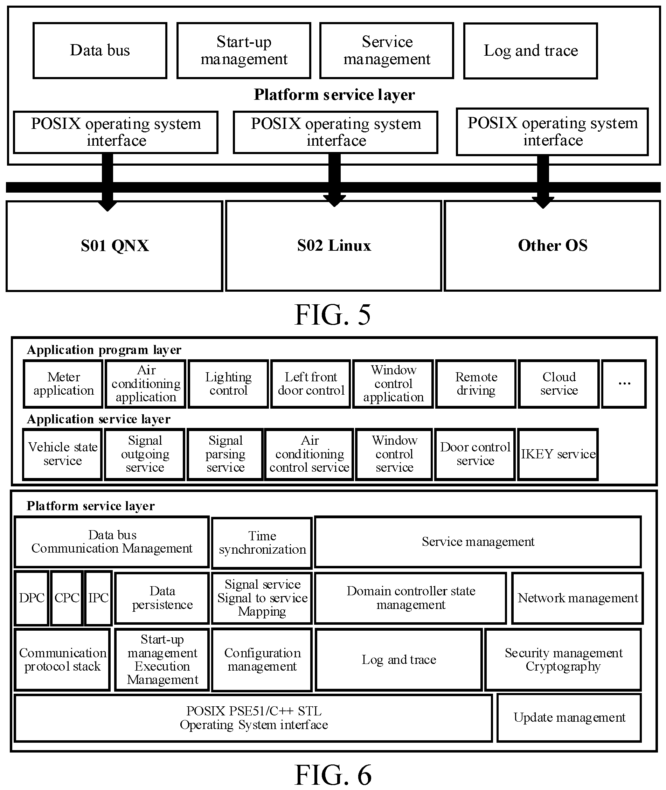

For example, as shown in FIG. 4 and as shown in FIG. 6, the platform service layer may include three parts: a data bus, a data function module including a number of processing modules, and an operating system interface module. The data bus module of the first part is mainly responsible for data circulation and sharing between domain controllers or inside a domain controller. Various data function modules of the second part implement respective corresponding data processing functions. For example, a signal acquisition service is responsible for sensor signal acquisition, and data persistence management is responsible for management of a status of an application program, setting of data storage, or the like. The operating system interface module of the third part mainly processes an upper-layer service and apply a function of invoking an operating system and a driver.

As shown in FIG. 4, the data function module may specifically include a time synchronization unit, a service management unit, a data persistence unit, a log and trace unit, a data update unit, a diagnostics service unit, a network management unit, a security management unit, a start-up management unit, a signal acquisition service unit, an executor control service unit, a configuration management unit, a communication protocol stack unit, a Rest interface unit, a domain control state management unit, and/or the like.

It may be understood that the arrangement of data processing units in the foregoing data function module is only an exemplary description, and the data processing units may be specifically flexibly arranged according to an actual case. This is not limited in the present disclosure.

The data bus may specifically include DPC, CPC, IPC, and the like.

Optionally, in this embodiment of the present disclosure, for domain controllers of different functions, due to different stability and real-time performance requirements, different operating systems are chosen. To ensure the portability of the development platform, an operating system interface layer needs to be kept at a bottom layer of the platform service layer, as shown in FIG. 5.

Optionally, in some embodiments, the operating system in the operating system and driver layer may include a Linux operating system or a QNX operating system, and each operating system corresponds to an operating system interface. For example, as shown in FIG. 5, in some embodiments, the operating system interface may be a portable operating system interface (POSIX).

In some other embodiments, to implement connections between hardware, an interface for bottom layer hardware is configured in a bottom layer of each operating system.

As shown in FIG. 6, the application layer in some embodiments of the present disclosure includes an application service layer and an application program layer.

A bottom layer is an application service layer, including, for example, a vehicle system service, a signal outgoing service, a signal parsing service, an air conditioning control service, a window control service, a door control service, an identity authentication service, and the like.

The vehicle system service may provide vehicle status signals such as a power shift notification, a shift status, a location, a speed, an acceleration, an electric capacity, a fuel volume, a driving range, and the like. The signal outgoing service may send out a signal, for example, a lighting signal, an air conditioning turn-on/turn-off signal, and the like. The signal parsing service may read original data of a signal from the data bus, and parse the original data into a specific signal value according to a specific protocol. The air conditioning control service may provide functions related to air conditioning control, for example, air conditioning turn-on/turn-off, volume setting, temperature setting, and the like. The identity authentication service may authenticate the identity of an operator.

An upper layer is application programs. According to specific application logic, the application programs may be developed into a meter application, an air conditioning application, a lighting application, a remote driving application, a remote invocation application, a cloud service application, among other applications. An upper-layer application may freely invoke a lower-layer application service. For example, the meter application program may invoke a vehicle status service, acquire vehicle information, and refresh a meter interface according to application logic. In addition, if a signal needs to be sent out, the signal outgoing service may be invoked to send out a signal. The cloud service may also invoke a control service to turn on air conditioning, unlock or lock a door or window, turn on seat heating and ventilation, and the like.

It may be understood that in the vehicle development platform according to the foregoing embodiment, the hardware layer, the operating system and driver layer, the platform service layer, the interface layer, the application service layer, and the application program layer that are connected to each other and intercommunicate with each other are arranged. In an actual application process of the platform, data acquired by the bottom layer hardware, for example, vehicle data acquired by a sensor, may be transmitted to the platform service layer through operating system interface, to perform corresponding processing in the platform service layer, for example, update a log, so that the data may be further transmitted to the different upper application service layer and application program layer, to implement data sharing and applications, for example, control of members such as a vehicle power system, air conditioning or a vehicle door.

Therefore, in the vehicle development platform according to this embodiment of the present disclosure, so that according to a logic architecture of domain controllers, the sensor, the executor, and the controller are flexibly arranged (decoupled). The data acquisition of the sensor, the control of the executor, and the functions of the controller are no longer closely coupled, to implement transparent sharing of data, so that data sources are wide, a data amount is large, and transparent sharing of data between domain controllers and between internal chips of a domain controller is supported. In addition, the domain controllers have openness and coordinated development, so that functions may be assigned to different development teams, providers, and the like for independent development and then seamlessly integrated. Different hardware platforms are supported. When a hardware platform is changed or upgraded, software modules of the functions do not need to be modified, and a quick response may be made to an application with high real-time performance, for example, a remote driving application. Power consumption management is performed, so that sleep, wakeup, among other functions, can be implemented, and the power consumption of the vehicle is controlled. The domain controllers can be kept consistent in clock, thereby maintaining synchronization. The vehicle domain controller joins an Ethernet, has network security, and prevents a hacker attack.

According to another aspect, embodiments of the present disclosure further provide a domain controller. The vehicle development platform in the foregoing embodiment is installed on the domain controller, so that after the development platform is installed, different users may perform corresponding independent development on the domain controller according to specific functions that need to be implemented.

According to another aspect, embodiments of the present disclosure further provide a vehicle control system. The control system at least includes, for example, the domain controller in the foregoing embodiment.

For example, in some embodiments, as shown in FIG. 1, the vehicle control system may include at least one domain controller.

The vehicle control system may further include a gateway, a common in-vehicle controller, and a network system such as a CAN network and/or an Ethernet configured to connect to the controller.

It may be understood that after the domain controller is loaded with the development platform, that is, the operating system of the domain controller, different providers and development teams may develop an application of the domain controller on this platform based on the operating system, to implement different functions, that is, various functions of the vehicle may be assigned to different development teams, providers, and the like to perform independent development and are then seamlessly integrated, to complete the construction of the vehicle control system.

It may be understood that after the construction of the vehicle control system is completed, the sensor, the executor, and the controller are flexibly arranged. The data acquisition of the sensor, the control of the executor, and the functions of the controller are no longer closely coupled, so that data sources are wide, a data amount is large, and transparent sharing of data between domain controllers and between internal chips of a domain controller is supported.

According to another aspect, embodiments of the present disclosure further provide a vehicle. The vehicle control system provided in the foregoing embodiment is run on the vehicle.

For example, on a track vehicle, for example, a subway or a light rail, the vehicle control system provided in the foregoing embodiment is run. The vehicle control system includes at least one domain controller in the foregoing embodiment. The development platform provided in the foregoing embodiment is constructed on the domain controller.

In the domain controller provided in the embodiments of the present disclosure, including a memory, a processor, and a computer program that is stored in the memory and executable on the processor, where the vehicle development platform in the foregoing embodiment is installed on the domain controller.

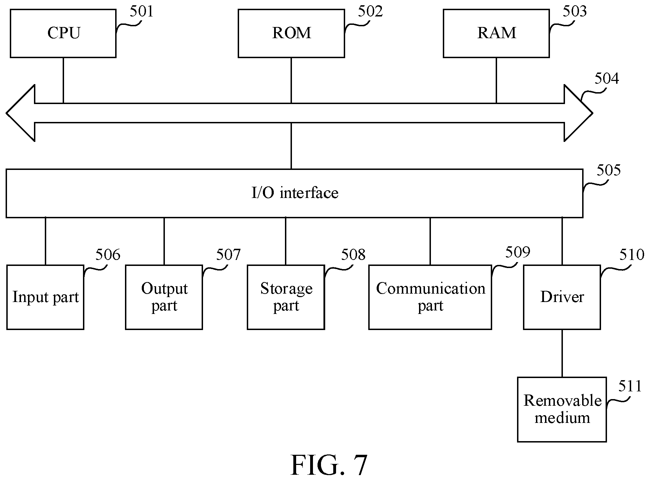

FIG. 7 is a schematic structural diagram of a computer electronic device of a domain controller according to an embodiment of the present disclosure.

As shown in FIG. 7, a computer electronic device 500 includes a central processing unit (CPU) 501, which can perform various appropriate actions and processing according to a program stored in a read-only memory (ROM) 502 or a program loaded into a random access memory (RAM) 503 from a storage part 502. The RAM 503 further stores various programs and data required for operations of the electronic device 500. The CPU 501, the ROM 502, and the RAM 503 are connected to each other through a bus 504. An input/output (I/O) interface 505 is also connected to the bus 504.

The following components are connected to the I/O interface 505: an input part 506 including a keyboard, a mouse, or the like; an output part 507 including a cathode ray tube (CRT), a liquid crystal display (LCD), a speaker, or the like; a storage part 508 including a hard disk or the like; and a communication part 509 of a network interface card, including a LAN card, a modem, or the like. The communication part 509 performs communication processing by using a network such as the Internet. A driver 510 is also connected to the I/O interface 505 as required. A removable medium 511, such as a magnetic disk, an optical disc, a magneto-optical disk, or a semiconductor memory, is mounted on the driver 510 as required, so that a computer program read from the removable medium is installed into the storage part 508 as required.

Particularly, according to the embodiments of the present disclosure, the processes described above by referring to the flowcharts may be implemented as computer software programs. For example, an embodiment of the present disclosure includes a computer program product, including a computer program carried on a machine-readable medium. The computer program includes program code for performing the method shown in the flowchart. In such an embodiment, the computer program may be downloaded and installed from a network through the communication part 509, and/or installed from the removable medium 511. When the computer program is executed by the central processing unit (CPU) 501, the above functions defined in the electronic device of the present disclosure are performed.

The computer-readable medium shown in the present disclosure may be a computer-readable signal medium, a computer-readable storage medium, or any combination thereof. The computer-readable storage medium may be, for example, but is not limited to, an electric, magnetic, optical, electromagnetic, infrared, or semiconductor electronic device, apparatus, or component, or any combination thereof. More specifically, the computer-readable storage medium may include, for example, but is not limited to, an electrical connection having one or more wires, a portable computer disk, a hard disk, a RAM, a ROM, an erasable programmable read-only memory (EPROM or flash memory), an optical fiber, a portable compact disc read-only memory (CD-ROM), an optical storage device, a magnetic storage device, or any suitable combination of the foregoing. In the present disclosure, the computer-readable storage medium may be any tangible medium including or storing a program, and the program may be used by or in combination with an instruction execution electronic device, apparatus, or device. In the present disclosure, a computer-readable signal medium may include a data signal being in a baseband or propagated as a part of a carrier wave, the data signal carrying computer-readable program code. The propagated data signal may be in a number of forms, including, but not limited to, an electromagnetic signal, an optical signal, or any appropriate combination thereof. The computer-readable signal medium may be further any computer-readable medium in addition to a computer-readable storage medium. The computer-readable medium may send, propagate, or transmit a program that is used by or used in combination with an instruction execution electronic device, apparatus, or device. The program code included in the computer-readable medium may be transmitted by using any suitable medium, including but not limited to, wireless transmission, a wire, a cable, radio frequency (RF) or the like, or any other suitable combination thereof.

The flowcharts and block diagrams in the accompanying drawings illustrate possible system architectures, functions, and operations that may be implemented by an electronic device, a method, and a computer program product according to various embodiments of the present disclosure. In this regard, each box in a flowchart or a block diagram may represent a module, a program segment, or a part of code. The foregoing module, the program segment, or the part of code includes one or more executable instructions used for implementing designated logic functions. It should be noted that in some implementations used as substitutes, functions marked in boxes may alternatively occur in a sequence different from that marked in an accompanying drawing. For example, two boxes shown in succession may actually be performed basically in parallel, and sometimes the two boxes may be performed in a reverse sequence. This is determined by a related function. It should be noted that each block in the block diagram and/or the flowchart, and a combination of blocks in the block diagram and/or the flowchart may be implemented by using a dedicated hardware-based electronic device that performs a specified function or operation, or may be implemented by using a combination of dedicated hardware and computer instructions.

The units or modules described in the embodiments of the present disclosure may be implemented by software or hardware. The described units or modules may be disposed in a processor.

According to another aspect, the present disclosure further provides a computer-readable storage medium. The computer-readable storage medium may be included in the electronic device described in the foregoing embodiments, or may exist alone and is not assembled in the electronic device. The foregoing computer-readable storage medium stores one or more programs. The foregoing programs, when executed by one or one processors, are configured to perform data processing corresponding to the programs described in the vehicle development platform of the present disclosure.

In summary, for the domain development platform, the domain controller, the vehicle control system, and the vehicle provided in the embodiments of the present disclosure, an operating system including a hardware layer, an operating system and driver layer, a platform layer, and an application layer that are interconnected bottom-up and intercommunicate with each other is developed on a domain controller, so that after all logic layers are integrated, a platform is provided for development and application of domain controllers. In this way, domain controllers with different functions can be independently developed and implement different functions, to construct a vehicle control system with complete functions. In a running process of a vehicle system, a large amount of data is transmitted between domain controllers in real time, to ensure the security of a user and a vehicle, enabling the control system to perform remote invocation according to actual requirements.

The above description is only a preferred embodiment of the present disclosure and a description of the technical principles utilized. It should be understood by those skilled in the art that the scope of the present disclosure is not limited to technical solutions formed by a particular combination of the above technical features, but also covers other technical solutions formed by any combination of the above technical features or their equivalent features without departing from the foregoing disclosure concept, for example, a technical solution formed by interchanging the above-mentioned features with (but not limited to) technical features having similar functions disclosed in the present disclosure.

## Claims

1. A vehicle development platform, wherein the vehicle development platform is run on a vehicle controller, and the development platform comprising a hardware layer, an operating system and driver layer, a platform service layer, and an application layer that are interconnected bottom-up and intercommunicate with each other;
the hardware layer being defined as a carrier for software resources and being configured to form a resource pool;
the operating system and driver layer being run on the hardware layer, and the operating system and driver layer being configured to provide a running condition for the platform service layer;
the platform service layer being run on the operating system and being configured to transmit and manage data in a vehicle; and
the application layer being configured to load an upper-layer service program and an upper-layer application program of the vehicle.

2. The vehicle development platform according to claim 1, wherein the platform service layer comprises a data bus module, a data function module, and an operating system interface module;
the data bus module is configured to transmit and share data between domain controllers or inside a domain controller on the vehicle;
the data function module is configured to store and update the data; and
the operating system interface module is configured to process an upper-layer service and application to invoke the operating system and a driver.

3. The vehicle development platform according to claim 1 or 2, wherein the operating system in the operating system and driver layer comprises a Linux operating system and a QNX operating system, and each operating system corresponds to one POSIX operating system interface.

4. The vehicle development platform according to claim 3, wherein a bottom layer hardware interface is configured in a bottom layer of each operating system.

5. The vehicle development platform according to any one of claims 2 to 4, wherein the data function module comprises a time synchronization unit, a service management unit, a data persistence unit, a log and trace unit, a data update unit, an executor control service unit, network management, security management, a signal acquisition service unit, and/or a diagnostics service unit.

6. The vehicle development platform according to any one of claims 1 to 5, wherein the application layer comprises an application service layer and an application program layer.

7. The vehicle development platform according to claim 6, wherein the application service layer comprises a vehicle state service module, a signal outgoing service module, a signal parsing service module, an air conditioning control service module, a window control service module, a door control service module and/or an identity authentication service module.

8. The vehicle development platform according to claim 6 or 7, wherein the application program layer comprises a meter application module, an air conditioning application module, a lighting control application module, a door control application module, a window control application module, a remote driving application module and/or a cloud service application module.

9. The vehicle development platform according to any one of claims 1 to 8, wherein the vehicle development platform is developed based on a service-oriented architecture.

10. A domain controller, comprising a memory, a processor, and a computer program that is stored in the memory and executable on the processor, wherein the vehicle development platform according to any one of claims 1 to 9 is installed on the domain controller.

11. A vehicle control system, the vehicle control system comprising at least one domain controller according to claim 10.

12. A vehicle, the vehicle control system according to claim 11 being installed on the vehicle.
